# EUROPÄISCHE PATENTANMELDUNG

(11) **EP 1 215 231 A2**
(43) Veröffentlichungstag der Anmeldung: **19.06.2002**
(21) Anmeldenummer: 01129882.5
(22) Anmeldetag: 14.12.2001
(51) Int. Cl.: C08J 11/08

(54) **Verfahren zum Herstellen eines Polypropylen-Blends**

(30) Priorität: 15.12.2000 DE 10062710
(71) Anmelder: DKR Deutsche Gesellschaft für Kunststoff-Recycling MBH, 51145 Köln (DE)
(72) Erfinder: Gorski, Guido, 51515 Kürten (DE); Thiele, Andreas, Dr., 52074 Aachen (DE)
(74) Vertreter: Tönhardt, Marion, Dr.

(57) **Zusammenfassung**

Ein Verfahren zum Herstellen eines Polypropylen-Blends durch Aufbereiten eines aus Polypropylen und anderen hochmolekularen Polymeren bestehenden Kunststoffgemisches, das mit niedermolekularen Polymeren und weiteren Fremdstoffen verunreinigt ist, ist gekennzeichnet durch die Schritte:
a) Einbringen des Kunststoffgemisches in ein organisches Lösungsmittel, in dem zumindest eines der hochmolekularen Polymere des Kunststoffgemisches bei einer für das Polymer spezifischen Temperatur lösbar ist,
b) Halten des Lösungsmittels bei Normaldruck auf einer Arbeitstemperatur, bei welcher keines der hochmolekularen Polymere gelöst wird, wobei ein bestimmtes Gewichtsverhältnis von Kunststoffgemisch zu Lösungsmittel eingestellt wird;
c) Extrahieren niedermolekularer Inhaltsstoffe während einer bestimmten Verweildauer des Kunststoffgemisches in dem Lösungsmittel;
d) Lösen des von niedermolekularen Inhaltsstoffen befreiten Kunststoffgemisches und Durchführen einer Fest-Flüssig-Trennung (FFT) zur Entfernung von unlöslichen Bestandteilen, wie Papier, Aluminium und anderen Polymeren je nach Lösungsmittel;
e) Lösen und Phasentrennung, also Ausnutzen des Auftretens mindestens zweier flüssiger-Phasen, zur Trennung in Fraktionen unterschiedlicher Polymerzusammensetzungen; und Lösen und selektives Fällen der Polypropylen-Fraktion mit Scherung oder Strömung;
f) Entgasen der Polypropylen-Fraktion; und
g) Granulieren der Polypropylen-Fraktion zum Polypropylen-Blend.

## Beschreibung

Die Erfindung betrifft ein Verfahren zum Herstellen eines Polypropylen-Blends durch Aufbereiten eines aus Polypropylen und anderen hochmolekularen Polymeren bestehenden Kunststoffgemisches, das mit niedermolekularen Polymeren und weiteren Fremdstoffen verunreinigt ist. Die Erfindung betrifft weiterhin ein nach dem Verfahren hergestelltes Polypropylen-Blend mit besonderen Eigenschaften.

"Hochmolekulare Polymere" sind dabei solche mit einem Molekulargewicht über etwa 10000, beispielsweise Polyvinylchlorid, Polystyrol, Polyethylenterephthalat, Polypropylen und Polyethylene, wie z.B. LDPE (Polyethylen niedriger Dichte), LLDPE (lineares Polyethylenn iedriger Dichte), MDPE (Polyethylen mittlerer Dichte). HDPE (Polyethylen hoher Dichte), UHDPE (Polyethylen ultrahoher Dichte), mit entsprechendem Polymerisationsgrad.

"Niedermolekulare Polymere" sind im Gegensatz solche mit einem Molekulargewicht bis etwa 5000, beispielsweise Wachse oder degradierte hochmolekulare Polymere.

Das Kunststoffgemisch kann auch Polyester enthalten.

Bei der Einführung des Dualen Systems im Hinblick auf die Durchführung der Verpackungsordnung in Deutschland stellte sich als besondere Herausforderung die ordnungsgemäße Verwertung der gesammelten Kunststoffe heraus. Dabei kam eine völlig neue Fraktion, nämlich die der Mischkunststoffe, auf den Markt. Für die Mischkunststoffe in ihrer Heterogenität und schwankenden Zusammensetzung müssen spezielle Verwertungswege gefunden werden. Dabei kommt hauptsächlich eine rohstoffliche Verwertung in Frage. Da die Kunststoffe im Rahmen des Dualen Systems zusammen mit einer Reihe von Störstoffen gesammelt werden. sind Verfahren entwickelt worden, die den Sortieraufwand auf ein vertretbares Maß reduzieren, aber dennoch einen bestimmten Reinheitsgrad des Kunststoffmaterials sicherstellen. Beispiele sind die Verfahren nach der WO 96/20819 und nach der WO 99/36180, die in trockenen Aufbereitungsverfahren Mischkunststoff-Agglomerate erzeugen. Erfolgreich arbeitet auch das Verfahren nach der WO 98/18607, bei dem unter anderem in einer Sink-Schwimm-Scheidung Polyolefine abgezogen werden.

Ziel ist es schließlich, die Mischkunststoffe sortenrein in Polymere aufzutrennen und diese dann möglichst wie Neuware einzusetzen. Dazu ist in der nach dem Prioritätstag der vorliegenden Anmeldung veröffentlichten WO 00/77082 A1 vorgeschlagen, eine Polyolefin-Kunststofffraktion mit einem Lösungsmittel in Verbindung zu bringen, wobei die Temperatur der Lösung und gegebenenfalls auch das Verhältnis aus Lösungsmittel und Kunststoffmenge so eingestellt werden, daß sich möglichst viele der Polymertypen lösen. In einer anschließenden Fest-Flüssig-Trennung wird ein Polymertyp aus der Lösung unter Scherung ausgefällt. In Kombination mit einem thermischen Trennverfahren beispielsweise nach der DE 198 06 355 A1, bei dem zwei flüssige Phasen erzeugt werden, von denen eine reicher an Lösungsmittel und die zweite reicher an Polymeren ist, können insbesondere PP (Polypropylen), LDPE (low density polyethylene, Polyethylen niedriger Dichte) und HDPE (high density polyethylene, Polyethylen hoher Dichte) getrennt werden.

Als störend für die weitere Verwertung, insbesondere, wenn diese Polyolefine wie Neuware verwendet werden sollen, hat sich ein Gehalt an Wachsen, Additiven, Abbauprodukten und sonstigen Verunreinigungen herausgestellt. Die mit demselben Prioritätstag eingereichte DE 100 62 437.5 schlägt vor, das Kunststoffgemisch in ein organisches Lösungsmittel einzubringen, in dem zumindest eines der hochmolekularen Polymere bei einer spezifischen Temperatur lösbar ist. Die spezifische Temperatur kann dabei als Lösetemperatur definiert werden, bei der mindestens eines der im Kunststoffgemisch enthaltenen Polymere in Gegenwart des verwendeten organischen Lösungsmittels zu mehr als 10 - 50 Gew.% in gelöster Form vorliegt. Im Verfahren wird das Lösungsmittel bei Normaldruck auf einer Arbeitstemperatur gehalten, bei welcher keines der hochmolekularen Polymere gelöst wird, wobei ein bestimmtes Gewichtsverhältnis von Kunststoffgemisch zu Lösungsmittel eingestellt wird. Während einer bestimmten Verweildauer werden dann die niedermolekularen Inhaltsstoffe extrahiert, dann wird gegebenenfalls das Kunststoffgemisch aus dem Lösungsmittel abgezogen.

Überraschend wurde gefunden, daß man Produkte mit ausgezeichneten Werkstoffeigenschaften erhält, wenn man zunächst bei Temperaturen unterhalb der Lösetemperatur die vermischten Kunststoffe durch Fest-Flüssig-Extraktion (FFE) von löslichen Bestandteilen befreit und erst danach in Lösung bringt sowie nachfolgenden Trennschritten unterzieht. Besonders gut gelingt dies, wenn das Kunststoffgemisch in Form von Pellets vorliegt.

Unter "Pellets" sollen dabei Granulate oder Agglomerate verstanden werden, die mit Hilfe der oben genannten Trocken- und Naßaufbereitungsverfahren gewonnen werden können. Granulate und insbesondere Agglomerate zeichnen sich durch eine hohe Porosität bzw. Oberflächenzerklüftung aus, so daß es überraschenderweise gelingt, die Extraktion von niedermolekularen Polymeren und weiteren Fremdstoffen mit einem zufriedenstellenden Reinheitsgrad durchzuführen. Man erhält, je nach Zusammensetzung des Ausgangsmaterials Kunststoff-Blends, die neben Neuware verwendet werden sollen oder diese auch ersetzen können.

Von den Kunststoff-Blends ist der Polypropylen-Blend besonders interessant.

Polypropylen ist ein teilkristalliner Werkstoff, wobei der kristalline Anteil je nach Herstellungsbedingungen etwa 50 bis 70 % beträgt. So wird bei der Homopolymerisation von Propylen isotaktisches, ataktisches und semitaktisches Polypropylen hergestellt. Dabei sind die hochisotaktischen bzw. hochkristallinen Homopolymere mechanisch hoch beanspruchbar, temperaturstandfest und haben eine geringe Kerbschlagzähigkeit bei tiefen Temperaturen. Die Herstellungsverfahren unterscheiden sich auch durch die unterschiedlichen Katalysator-Systeme, die bei der Polymerisation angewendet wird. Dementsprechend wird zwischen Zieler-Natta- und Metallocen-Polypropylen unterschieden. Desweiteren gibt es verschiedene Verfahren, nach denen Block- und Random-Copolymere hergestellt werden.

Im Handbuch Dr. Ing. Bodo Carlowitz "Kunststofftabellen", Hanser Verlag, 4. Auflage, Seiten 33 bis 47, sind die allgemeinen Eigenschaften von Polypropylen beschrieben. Es zeigt sich, daß der Schmelzindex MFR 230/2,16 der nach den obigen Verfahren hergestellten Polypropylene in einem Bereich von 0,2 bis 50 g/10 min liegt. Mit steigendem MFR-Wert nimmt beispielsweise die Zugfestigkeit für die einzelnen Polypropylenarten stark ab, so daß für ein höher isotaktisches Homopolypropylen bei einer Dichte von 0,906 bis 0,910 g/cm³ mit einem sehr hohen MFR-Wert von 20 bis 40 g/10 min die Streckspannungen bei 30 bis 34 N/mm² liegen.

Die Verarbeitung von Polypropylen geschieht im allgemeinen durch Verspritzen. Um dort zu höheren Zykluszeiten zu kommen, aber trotzdem Polypropylen-Spritzgußteile mit guten, konstanten mechanischen Eigenschaften zu erhalten, ist es wünschenswert, aus Verpackungskunststoffen ein leicht fließendes Polypropylen zu erhalten, das in den mechanischen Eigenschaften genau so gut ist wie ein weniger leicht fließendes Polypropylen.

Es ist daher die Aufgabe der Erfindung, ein Verfahren zur Verfügung zu stellen, mit dem ein Polypropylen-Blend mit definierter Zusammensetzung und einer Reinheit von mehr als 95 % aus gemischten Kunststoffverpackungen hergestellt werden kann, das gegenüber Neuware in der Verarbeitung dadurch vorteilhaft ist, daß es leicht fließt, dabei aber mechanisch zufriedenstellende Eigenschaften hat.

Diese Aufgabe wird durch ein Verfahren nach Anspruch 1 gelöst. Vorteilhafte Ausgestaltungen sind Gegenstand der Unteransprüche. Ein nach dem Verfahren hergestelltes Polypropylen-Blend ist Gegenstand von Anspruch 9.

Das erfindungsgemäße Verfahren ist gekennzeichnet durch
- Einbringen des Kunststoffgemisches in ein organisches Lösungsmittel, in dem zumindest eines der hochmolekularen Polymere des Kunststoffgemisches bei einer für das Polymer spezifischen Temperatur lösbar ist,
- Halten des Lösungsmittels bei Normaldruck auf einer Arbeitstemperatur, bei welcher keines der hochmolekularen Polymere gelöst wird, wobei ein bestimmtes Gewichtsverhältnis von Kunststoffgemisch zu Lösungsmittel eingestellt wird;
- Extrahieren niedermolekularer Inhaltsstoffe während einer bestimmten Verweildauer des Kunststoffgemisches in dem Lösungsmittel;
- Lösen des von niedermolekularen Inhaltsstoffen befreiten Kunststoffgemisches und Durchführen einer Fest-Flüssig-Trennung (FFT) zur Entfernung von unlöslichen Bestandteilen, wie Papier, Aluminium und anderen Polymeren je nach Lösungsmittel;
- Lösen und Phasentrennung, also Ausnutzen des Auftretens mindestens zweier flüssiger-Phasen, zur Trennung in Fraktionen unterschiedlicher Polymerzusammensetzungen; und Lösen und selektives Fällen der Polypropylen-Fraktion mit Scherung oder Strömung;
- Entgasen der Polypropylen-Fraktion; und
- Granulieren der Polypropylen-Fraktion zum Polypropylen-Blend.

Durch diese Schrittabfolge wird gewährleistet, daß das Polypropylen in der gewünschten Reinheit zur Verfügung steht.

Bei den Trennschritten wird beispielsweise, wie es die DE 198 06 355 A1 lehrt, ausgenutzt, daß beim Lösen eines Kunststoffgemisches in einem organischen Lösungsmittel unter bestimmten Bedingungen eine Mischungslücke entsteht und zwei flüssige Phasen erzeugt werden, die getrennt weiterbehandelt werden können. Aus flüssiger Phase kann auch selektiv unter Scherung oder Strömung oder unter Zugabe eines Fällungsmittels gefällt werden. Dieses Trennverfahren kann allein oder in Kombination mit der Flüssig-Flüssig-Phasentrennung durchgeführt werden. Als weiteres Trennverfahren kommt eine selektive Inlösungnahme in Frage, die ebenfalls allein oder in Kombination mit Fällung unter Scherung oder Strömung oder durch Zugabe eines Fällungsmittels ausgeführt werden kann. Auch kann die Kombination der selektiven Inlösungnahme mit der Flüssig-Flüssig-Phasentrennung allein oder wieder in Kombination mit den oben beschriebenen Fällverfahren eingesetzt werden.

Dabei kann vorgesehen sein, das Lösungsmittel nach dem Extraktionsschritt zu entfernen und frisches Lösungsmittel, entweder ein chemisch identisches oder nicht-identisches, zur nachfolgenden Trennung in Polymerfraktionen eingesetzt wird.

Als Lösungsmittel kommen aliphatische, aromatische oder zyklische, gesättigte oder ungesättigte Kohlenwasserstoffe, Alkohole, Carboxylsäuren, Amine, Ester, Ketone, Tetrahydrofuran, Bimethylformamid, Dimethylsulfoxid, N-Methylpyrrolidon oder deren Mischungen in Frage.

Besonders bevorzugt ist die Verwendung von Hexan oder Oktan als Lösungsmittel.

Das Lösungsmittel wird vorzugsweise im Kreislauf geführt, wobei bei Erreichen einer Grenzkonzentration an niedermolekularen Polymeren im Lösungsmittel dieses abgezogen und durch Destillieren gereinigt werden kann. Es wird dann Frisch-Lösungsmittel zum Extrahieren zurückgeführt.

Die Konzentration an Kunststoffgemisch im Lösungsmittel kann etwa 10 bis 20 Gew.% betragen, abhängig von der Zusammensetzung des Kunststoffgemisches und der Art des Lösungsmittels.

Die Arbeitstemperatur wird bevorzugt im Bereich von 60 °C bis 70 °C gehalten. Die Verweildauer sollte zwischen 60 bis 90 Minuten betragen, um etwa 80 % der Wachse auszureinigen.

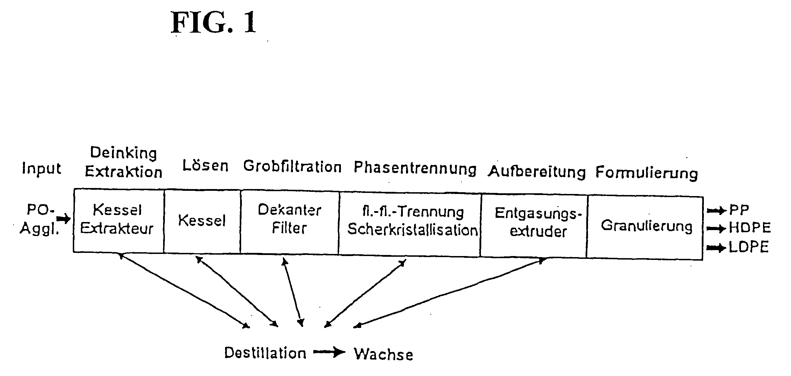

Im folgenden soll anhand der Zeichnung und anhand von Beispielen die Erfindung näher erläutert werden. Es zeigt
- Figur 1: eine schematische Darstellung des Verfahrens gemäß der vorliegenden Erfindung.

Figur 1 zeigt schematisch die Verfahrensführung. Die Mischkunststoff-Pellets, beispielsweise bestehend aus Polypropylen und Polyethylenen, werden in das Lösungsmittel, beispielsweise Hexan, in einem bestimmten Gewichtsverhältnis eingetragen. Durch Rühren wird eine geringe Relativbewegung von Pellets zu Lösungsmittel erzeugt. Die Lösungsmitteltemperatur wird dabei auf 60 bis 70 °C, bevorzugt auf 65 °C, eingestellt. Nach einer Verweildauer von 70 bis 90 Minuten werden die extrahierten Mischkunststoff-Pellets abgezogen und ohne Desolventierung in einem Lösungsmittelkessel, der ebenfalls Hexan enthält, zur weiteren Verarbeitung aufgelöst.

Anschließend werden in einem als Filter arbeitenden Dekanter unlösliche Bestandteile, wie Papier oder Aluminium oder auch andere Polymere, die in Hexan nicht löslich sind, abgezogen. Anschließend erfolgt die Auftrennung des Polymergemisches durch Flüssig-Flüssig-Phasentrennung und Scherkristallisation, wie es in der WO 00/77082 A1 beschrieben ist. Die einzelnen Fraktionen PP, HDPE und LDPE werden dann einzeln in einem Extruder entgast und anschließend formuliert. Die so behandelte Polypropylen-Fraktion bildet das Polypropylen-Blend gemäß der vorliegenden Erfindung.

In der folgenden Tabelle sind die Eigenschaften eines nach der Erfindung hergestellten Polypropylen-Blends zusammengefaßt.

### Beispiel

| **Eigenschaft** | **Vorschrift/Methode** | **PRL-Verfahren/PP-Blend** | |
|---|---|---|---|
| | | **Mittelwert** | **Stabw** |
| Streckspannung (Mpa) | ISO 527 | 32,8 | 1,8 |
| Streckdehnung (%) | ISO 527 | 8,3 | 0,8 |
| Bruchdehnung (%) | ISO 527 | 86,2 | 24,3 |
| Zug E-Modul (MPa) | ISO 527 | 1.403 | 133 |
| Kerbschlagzähigkeit 23+/-5°C (kJ/m²) | ISO 179 | 3,9 | 0,1 |
| Schmelzindex MFR 230/2,16 (g/10 min.) | ISO 1133 | 16,3 | 7,2 |
| Schmelzpunkt (°C) | ISO 3146 | 163,2 | 1,4 |
| Oxidationsbeständigkeit (min) | DIN EN 728 | 12,8 | 6,3 |
| Molekulargewicht | | | |
| -Mw (g/mol) | GPC | 234.000 | 34.000 |
| - Mw/Mn (g/mol) | GPC | 5,5 | 0,8 |
| Gehalt an PP von Polymer (Gew.-%) | DSC² | 95,8 | 1,4 |
| Gehalt an PE von Polymer (Gew.-%) | DSC² | 4,2 | 1,4 |
| Wachsgehalt (Gew.-%)³ | Extraktion | 2,4 | 1,1 |
| Glührückstand (Gew.-%)³ | ISO R 1270 | 0,09 | 0,09 |
| Chlorgehalt (Ges. Chlor %)³ | | 0,01 | 0,00 |

### Vergleichsbeispiel

Bei einem zur Zeit vorhandenen Verfahren zum Recycling von Kunststoff-Verpackungen wird ausschließlich aus der Becherfraktion nach einer Schwimm-Sink-Trennung ein Polypropylen-Regranulat erzeugt, das im Vergleich zur Neuware schlechtere Eigenschaften aufweist. Bei einem MFR 230/2,16 von 4 bis 5 g/10 min liegt die Zugfestigkeit bei 30 bis 40 N/mm².

Die in der vorstehenden Beschreibung sowie in den Ansprüchen offenbarten Merkmale der Erfindung können sowohl einzeln als auch in beliebiger Kombination für die Verwirklichung der Erfindung wesentlich sein.

## Patentansprüche

1. Verfahren zum Herstellen eines Polypropylen-Blends durch Aufbereiten eines aus Polypropylen und anderen hochmolekularen Polymeren bestehenden Kunststoffgemisches, das mit niedermolekularen Polymeren und weiteren Fremdstoffen verunreinigt ist, **gekennzeichnet durch** die Schritte:
a) Einbringen des Kunststoffgemisches in ein organisches Lösungsmittel, in dem zumindest eines der hochmolekularen Polymere des Kunststoffgemisches bei einer für das Polymer spezifischen Temperatur lösbar ist,
b) Halten des Lösungsmittels bei Normaldruck auf einer Arbeitstemperatur, bei welcher keines der hochmolekularen Polymere gelöst wird, wobei ein bestimmtes Gewichtsverhältnis von Kunststoffgemisch zu Lösungsmittel eingestellt wird;
c) Extrahieren niedermolekularer Inhaltsstoffe während einer bestimmten Verweildauer des Kunststoffgemisches in dem Lösungsmittel;
d) Lösen des von niedermolekularen Inhaltsstoffen befreiten Kunststoffgemisches und Durchführen einer Fest-Flüssig-Trennung (FFT) zur Entfernung von unlöslichen Bestandteilen, wie Papier, Aluminium und anderen Polymeren je nach Lösungsmittel;
e) Lösen und Phasentrennung, also Ausnutzen des Auftretens mindestens zweier flüssiger-Phasen, zur Trennung in Fraktionen unterschiedlicher Polymerzusammensetzungen; und Lösen und selektives Fällen der Polypropylen-Fraktion mit Scherung oder Strömung;
f) Entgasen der Polypropylen-Fraktion; und
g) Granulieren der Polypropylen-Fraktion zum Polypropylen-Blend.

2. Verfahren nach Anspruch 1, **dadurch gekennzeichnet, daß** vor dem Schritt b) bei einer Temperatur T1, die geringer ist, als die Arbeitstemperatur, mindestens eines der im Kunststoffgemisch enthaltenen Polymere in Lösung genommen wird und mit Methoden der Fest-Flüssig-Trennung von den verbleibenden Polymeren und mindestens einem Teil der störenden löslichen Verunreinigungen getrennt wird.

3. Verfahren nach Anspruch 1, **dadurch gekennzeichnet, daß** bei Erreichen einer Grenzkonzentration an niedermolekularen Polymeren im Lösungsmittel dieses abgezogen und durch Destillieren gereinigt und als Frisch-Lösungsmittel zum Extrahieren zurückgeführt wird.

4. Verfahren nach Anspruch 1, **dadurch gekennzeichnet, daß** als Lösungsmittel aliphatische, aromatische oder zyklische, gesättigte oder ungesättigte Kohlenwasserstoffe, Alkohole, Caroxylsäuren, Amine, Ester, Ketone, Tetrahydrofuran, Bimethylformamid, Dimethylsulfoxid, N-Methylpyrrolidon oder deren Mischungen verwendet werden.

5. Verfahren nach Anspruch 1, **dadurch gekennzeichnet, daß** die Konzentration des Kunststoffgemisches im Lösungsmittel etwa 10 bis 20 Gew.% beträgt.

6. Verfahren nach Anspruch 1, **dadurch gekennzeichnet, daß** die Arbeitstemperatur im Bereich von 60 °C bis 70 °C gehalten wird.

7. Verfahren nach Anspruch 1, **dadurch gekennzeichnet, daß** die Verweildauer 60 bis 90 Minuten beträgt.

8. Verfahren nach Anspruch 1, **dadurch gekennzeichnet, daß** das einzubringende Kunststoffgemisch aus rieselfähigen Pellets besteht.

9. Polypropylen-Blend, hergestellt nach dem Verfahren gemäß einem der vorangehenden Ansprüche, **gekennzeichnet durch** einen Gehalt von mehr als 95 Gew.-% Polypropylen.

10. Polypropylen-Blend nach Anspruch 9, **gekennzeichnet durch** einen mittleren Schmelzindex nach ISO 1133 MFR 230/2,16 von 16,3 ± 1,6 g/10 min.

11. Polypropylen-Blend nach Anspruch 9 oder 10, **gekennzeichnet durch** eine mittlere Streckspannung von 32,8 ± 3,3 Mpa.
